# EUROPÄISCHE PATENTSCHRIFT

(11) **EP 2 197 927 B1**
(45) Veröffentlichungstag und Bekanntmachung des Hinweises auf die Patenterteilung: **06.09.2017**
(21) Anmeldenummer: 08840068.4
(22) Anmeldetag: 10.10.2008
(51) Int. Cl.: C08G 12/42, D04H 1/4326, D04H 3/009, D04H 3/02, D04H 3/16, D01D 5/098, D01F 6/74

(54) **THERMOPLASTISCH VEREINBARTES AMINOPLASTHARZ, DUROPLASTISCHE FEINSTFASERVLIESE SOWIE VERFAHREN UND ANLAGE ZU IHRER HERSTELLUNG**
THERMOPLASTICALLY PROCESSIBLE AMINOPLASTIC RESIN, THERMOSET MICROFIBRE NON-WOVENS, AND PROCESS AND PLANT FOR THEIR PRODUCTION
RÉSINE AMINOPLASTE TRANSFORMABLE PAR VOIE THERMOPLASTIQUE, NON-TISSÉS EN MICROFIBRES DUROPLASTIQUES, ET PROCÉDÉ ET INSTALLATION POUR LES FABRIQUER

(30) Priorität: 12.10.2007 DE 102007049992; 07.02.2008 DE 102008008453
(43) Veröffentlichungstag der Anmeldung: 23.06.2010
(73) Patentinhaber: Borealis Agrolinz Melamine GmbH, 4021 Linz (AT)
(72) Erfinder: PANZER, Ulf, A-4320 Perg (AT); RIEDEL, Bernd, 07333 Unterwellenborn (DE); PFEIFFER, Steffen, A-4030 Linz (AT); BUCKA, Hartmut, A-4622 Eggendorf (AT); SIGMUND, Ina, 09116 Chemnitz (DE); MEISTER, Frank, 07407 Rudolstadt (DE); MACHHERNDL, Markus, A-4060 Leonding (AT); GROSSALBER, Markus, A-4432 Ernsthofen (AT)
(74) Vertreter: Maikowski & Ninnemann Patentanwälte Partnerschaft mbB
(86) Internationale Anmeldenummer: PCT/EP2008/063680
(87) Internationale Veröffentlichungsnummer: WO 2009/050128

(56) Entgegenhaltungen:
- EP-A- 1 403 405
- WO-A-02/40564
- WO-A-03/046053
- WO-A-03/106558
- WO-A-2004/056900
- WO-A-2004/092239
- WO-A-2006/024544
- WO-A-2006/100041
- WO-A-2006/136457
- WO-A-2007/096200
- WO-A-2009/010546
- DE-A1- 4 014 989
- DE-A1- 10 302 079
- DE-A1- 19 620 379

## Beschreibung

Die vorliegende Erfindung betrifft ein thermoplastisch verarbeitbares Aminoplastharz, ein Verfahren zu deren Herstellung, ein duroplastisches Feinstfaservlies, ein Verfahren und eine Anlage zur Herstellung von duroplastischen Feinstfaservliesen aus thermoplastisch verarbeitbaren Aminoplastharzen, insbesondere Melaminharzen, und die Verwendung des duroplastischen Feinstfaservlieses.

In verschiedenen Bereichen der verarbeitenden Industrie besteht ein hoher Bedarf an Fasermaterialien, welche chemisch resistent, schwer entflammbar, leicht zu verarbeiten, preiswert herzustellen und ohne Gefahr für Mensch und Umwelt sein sollen. Anwendungsbereiche solcher Fasermaterialien sind zum Beispiel Schutzkleidung oder die Innenausstattung von Fahrzeugen und Hotelmöbel/Raumtextilien für öffentliche Einrichtungen, wo hohe Anforderungen an die Widerstandsfähigkeit gegenüber Flammen gestellt werden, weiterhin Dämmungsmaterial für Motoren oder Filtermaterialien für industrielle Prozesse.

Duroplastische Werkstoffe auf Basis von Triazinharzen, wie zum Beispiel Melamin-Formaldehyd-Harze, sind für die genannten Anwendungen sehr gut geeignet und bilden eine Gruppe von schwer entflammbaren, chemisch resistenten und preiswert in großer Menge herstellbaren Ausgangsmaterialien.

Von Nachteil bei der Herstellung von Fasern oder Schäumen, Halbzeugen oder Formstoffen, wie z.B. Beschichtungen, Schichtpressstoffen, Laminaten, Formstoffen im Haushaltsbereich und der Elektroindustrie aus Triazinharzen ist jedoch deren schwierige Verarbeitbarkeit nach üblichen thermo-plastischen Verarbeitungsverfahren wie Extrusion, Spritzguss oder Blasformen, da hoch-molekulare Melaminharze vernetzt und unschmelzbar sind.

Unvernetzte niedermolekulare Melaminharz-Vorkondensate besitzen eine zu geringe Schmelzviskosität für diese Verarbeitungsverfahren und können lediglich als hochgefüllte Formmassen bei langen Zykluszeiten unter Härtung der Erzeugnisse verarbeitet werden (Woebcken, W., Kunststoff-Handbuch Bd. 10 "Duroplaste", Carl Hanser Verl. München 1988, S. 266-274).

Fasern (EP 0093 965 A1), Schäume (EP 0017671 A1) oder Beschichtungen (WO 96/20239 A1) aus Melaminharzen können auf Grund der niedrigen Schmelzviskosität der Melaminharzvorkondensate nur ausgehend von Lösungen der Melaminharzvorkondensate unter Aushärtung während der Formgebung hergestellt werden.

Darüber hinaus führen die flüchtigen Nebenprodukte bei der Polykondensation der Aminoplastvorkondensate zu Mikroporen oder Rissen in der Oberfläche der Produkte. Somit entstehen Materialien, die eine herabgesetzte Resistenz gegenüber Umwelteinflüssen besitzen.

Die DE10056398 beschreibt ein aus der Schmelze verarbeitbares Triazin-Formaldehyd-Harz, welches nach einem aufwendigen dreistufigen Verfahren hergestellt wird. Die Vorhärtung erfolgt in diesem Fall bei relativ hohen Temperaturen (160-200°C) in einem Extruder, wodurch eine weitgehende Vorhärtung bedingt ist und damit ein hoher Erweichungspunkt oberhalb von 100°C, wodurch wiederum ein enges Verarbeitungsfenster bedingt ist.

Aus Melaminharzen sind nach bekannten Verfahren Faserstoffe herstellbar (DE10038030, WO 2006/100041). Im Falle der Herstellung nach Verfahren gemäß DE10038030 sind - im Gegensatz zum hier beschriebenen Verfahren, wobei Vliesstoffe in einem einstufigen Prozess aus veretherten Melaminharzen (sogenannten MER) produziert werden - aus den dabei entstehenden Stapelfasern praktisch keine zu 100% auf Melaminharz basierenden textilen Flächengebilde herstellbar. Dadurch ist die Verwendung von solchen Melaminharzfasern in den genannten Anwendungen eingeschränkt bzw. erfordert weitere, in der Regel flammresistente Fasern zur Gewährleistung der geforderten Eigenschaften.

Technologien und Prozesse der textilen Flächenbildung sind wesentlich von der auf der Verwendung von Naturfasern beruhenden Tradition beeinflusst. Naturfasern liegen als Stapelfasern vor, die durch Länge und Feinheit definiert sind. Synthetische Fasern aus Melaminharzen nach den bereits genannten Verfahren, welche wegen ihrer bevorzugten chemischen und physikalischen Eigenschaften für die genannten Verwendungen besser geeignet sind als jede Naturfaser, werden gemäß den aus dem Stand der Technik bekannten Verfahren durch Bearbeitungsschritte wie u.a. Kardieren verarbeitet, um daraus einen Faden bzw. eine textile Fläche herzustellen. Diese Verarbeitungsschritte sind komplex, aufwendig und führen zu einem unbefriedigenden Ergebnis, da Faserschädigungen auftreten und in der Regel zur Gewährleistung der Verarbeitbarkeit eine Kombination mit anderen Faserarten erforderlich ist.

In der Praxis werden beispielsweise Fasern auf Basis von Polyaramid (m- und p-Aramid) eingesetzt, was die Komplexität der Herstellung erhöht und die Herstellkosten solcher textilen Flächen deutlich heraufsetzt. Insbesondere wäre es für die genannten Verwendungen von großem Interesse, ein Vliesstoff ("Nonwoven") zur Verwendung als hitze- und flammfeste Sperrschicht in Schutzkleidung, Dämm-Materialien und textilen Filtermaterialien zur Verfügung zu stellen.

Ein Verfahren zur Herstellung von duroplastischen Feinstfaservliesen ist in WO 2006/100041 beschrieben. Die mit diesem Verfahren erhaltenen Vliese weisen große Vorteile gegenüber mit anderen Verfahren erhältlichen Fasermaterialien auf, sind aber in ihren Eigenschaften noch weiter verbesserungsfähig. Insbesondere ist ihre Flexibilität, Beanspruchbarkeit und Stabilität bei der Weiterverarbeitung zu fertigen Endprodukten noch zu verbessern.

WO 2004/056900 A1 betrifft ein Syntheseverfahren zur Herstellung von veretherten Melaminharzkondensaten, wobei in einem ersten Reaktionsschritt ein verethertes Melaminharzvorkondensat in alkoholischer Lösung hergestellt wird, dieses Vorkondensat in Gegenwart von weiteren Alkoholen oder Diolen aufkonzentriert wird, und dass aufkonzentrierte Vorkondensat in einem zweiten Reaktionsschritt in einem Mischer umgesetzt wird. Methylolierung und Veretherung können gleichzeitig durchgeführt werden.

WO 2006/024544 offenbart modifizierte Aminotriazinharze, herstellbar durch die Reaktion einer modifizierten Aminotriazinharzschmelze mit einem Aminotriazin. In den modifizierten Aminotriazinharzen können die Kondensationsprodukte teilweise oder vollständig verethert vorliegen. Diese werden in einem weiteren Reaktionsschritt teilweise oder vollständig mit aliphatischen C4-C18-Alkoholen oder aromatischen Alkoholen, Diolen oder Polyolen umgesetzt, so dass Polymere mit hohen Molmassen aufgebaut werden. Die hergestellten Aminotriazinharze weisen Viskositäten zwischen 450 bis 12.000 Pa*s auf.

WO 2004/092239 A1 betrifft ein Verfahren zur kontinuierlichen Synthese eines Melaminharzes, wobei hierfür in einer ersten Reaktionsstufe Melamin, ein Aldehyd und ein Alkohol umgesetzt werden, und das Reaktionsgemisch anschließend in eine feststoffreiche und feststoffarme Phase aufgetrennt wird.

WO 02/40564 betrifft ein Verfahren zur Herstellung von Triazin-Aldehyd-Harzen, wobei ein Aminotriazin mit einem Aldehyd umgesetzt wird, wobei das gebildete Harz anschließend einer Veretherung mit einem Alkohol und einer Vorhärtung bei Temperaturen von 160 bis 200° unterzogen wird. Das so erhaltene Aminoplastharz ist durch eine Erweichungstemperatur oberhalb von 100°C gekennzeichnet.

WO 2006/136457 betrifft veretherte Melaminharze herstellbar durch Umsetzung von Melamin, Formaldehyd und Alkanol, die nach Umetherung Viskositäten im Bereich zwischen 2 und 200 Pa*s bei 130°C aufweisen können. Die Melaminharze weisen Molmassen zwischen 1500 und 200.000 auf.

Ausgehend vom dargelegten Stand der Technik ist es Aufgabe der vorliegenden Erfindung, ein Verfahren zur Herstellung eines nach thermoplastischen Methoden verarbeitbares Aminoplastharz zur Verfügung zu stellen, wobei das Aminoplastharz einfach herstellbar ist, ein breites Verarbeitungsfenster aufweist und insbesondere zur Herstellung von Fasern und faserhaltigen Vliesstoffen geeignet ist.

Diese Aufgabe wird gelöst durch ein Verfahren zur Herstellung eines thermoplastisch verarbeitbares Aminoplastharzes.

Demnach ist das mit dem erfindungsgemäßen Verfahren herstellbare Aminoplastharz durch eine Viskosität zwischen 0,1 bis 200 Pas, bevorzugt zwischen 1 bis 150 Pas, insbesondere bevorzugt zwischen 3 bis 100 Pas, bei Temperaturen zwischen 90 bis 150°C, bevorzugt zwischen 100 bis 150°C, insbesondere bevorzugt zwischen 110 bis 140°C über einen Zeitraum von mindestens 15 Minuten, bevorzugt von mindestens 20 Minuten, insbesondere bevorzugt von mindestens 30 Minuten gekennzeichnet.

Das hergestellte Aminoplastharz weist bei einer Temperatur von 130°C eine Viskosität zwischen 3 bis 100 Pas über einen Zeitraum von mindestens 25 Minuten auf.

Das Harz weist somit eine ausreichende Stabilität unter den üblichen Verarbeitungsbedingungen von Thermoplasttechnologien wie z.B. Extrusion, Spritzguss oder Blasformen auf. Das erfindungsgemäße Harz unterliegt im angegebenen Zeitraum keiner bzw. lediglich einer minimalen Vernetzung bzw. Eigenkondensation, so dass es thermoplastisch verarbeitbar ist.

Die Aminoplastharze der Erfindung weisen eine Glasübergangstemperatur Tg von mehr als 40°C, bevorzugt zwischen 40°C und 80°C auf, besonders bevorzugt zwischen 45°C und 65°C. Unter der Glasübergangstemperatur Tg ist dabei die Temperatur zu verstehen, bei der amorphe oder teilkristalline Polymere vom flüssigen oder gummielastischen Zustand in den hartelastischen Zustand übergehen.

Die Aminoplastharze weisen vorteilhafterweise eine Molmasse von M_{w} = 150-1000 g/mol, insbesondere zwischen 150 und 600 g/mol auf.

Unter Normalbedingungen (Raumtemperatur, 1 bar Luftdruck) liegen die erfindungsgemäßen Harze bevorzugt als Festharze vor.

Das erfindungsgemäße Verfahren ist in ein einfaches zweistufiges Verfahren.

Demnach ist das thermoplastisch verarbeitbares, verethertes Aminoplastharz herstellbar durch:
a) Gleichzeitige Umsetzung mindestens einer Triazinverbindung mit mindestens einem Aldehyd und mindestens einem Alkohol, wobei die Triazinverbindung der allgemeinen Formel (I) 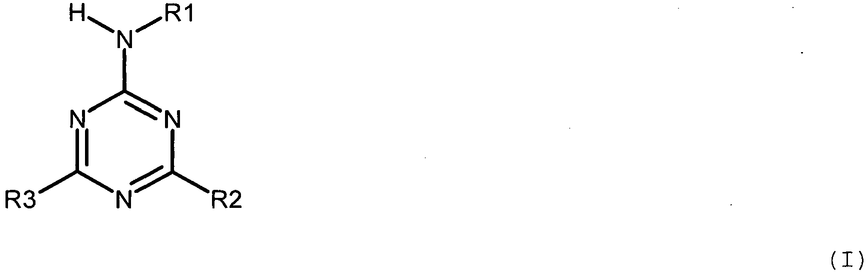 entspricht, wobei
   - R² Q¹ oder einen mit seinem zentralen Stickstoffatom an den Triazinring der Struktur der Formel (I) gebundenen Rest der Formel **R⁴**-N-**R⁵** bedeutet, wobei
      Q¹ ein lineares oder verzweigtes C₁-C₅₀-Alkyl oder einen cyclischen Substituenten in Form eines C₅-C₂₀-Cycloalkyls, eines C₅-C₂₀-Aryls, eines C₁-C₂₀-alkylsubstituierten C₅-C₂₀-Aryls, C₂-C₂₀-Heterocyclus, C₂-C₂₀-alkenylsubstituiertes C₂-C₂₀-Heterocyclus, C₁-C₅₀-Alkylsubstituiertes C₂-C₂₀-Heterocyclus, eines C₂-C₂₀-Alkenyl, eines C₂-C₂₀-alkenylsubstituierten C₅-C₂₀-Aryls, eines C₂-C₁₂-Alkinyl oder eines Imids von cyclischen gesättigten oder ungesättigten Carbonsäuren, wobei das C₁-C₅₀-Alkyl oder der cyclische Substituent durch ein oder mehrere Sauerstoffatome, Schwefelatome, substituierte und/oder unsubstituierte Stickstoffatome und/oder durch ein oder mehrere Gruppen des Typs -C(O)O-, -OC(O)-, -C(O)-, -NHC(O)O-, -OC(O)NH- und/oder-OC(O)O- unterbrochen sein kann, ist,
   - R³ Q¹ oder einen mit seinem zentralen Stickstoffatom an den Triazinring der Struktur der Formel (I) gebundenen Rest der Formel **R⁶**-N-**R⁷** bedeutet,
   - **R¹**, **R⁴**, **R⁵**, **R⁶ und R⁷** unabhängig voneinander H oder Q² bedeuten, wobei
      - Q² jeweils lineares oder verzweigtes C₁-C₅₀-Alkyl, C₅-C₂₀-Cycloalkyl, C₅-C₂₀-Aryl, C₁-C₂₀-alkylsubstituiertes C₅-C₂₀-Aryl, C₂-C₂₀-Heterocyclus, C₂-C₂₀-alkenylsubstituiertes C₂-C₂₀-Heterocyclus, C₁-C₅₀-Alkylsubstituiertes C₂-C₂₀-Heterocyclus, C₂-C₂₀-Alkenyl, C₂-C₂₀-alkenylsubstituiertes C₅-C₂₀-Aryl oder C₂-C₁₂-Alkinyl, das jeweils durch ein oder mehrere Sauerstoffatome, Schwefelatome, substituierte und/oder unsubstituierte Stickstoffatome und/oder durch ein oder mehrere Gruppen des Typs -C(O)O-, -OC(O)-, -C(O)-,-NHC(O)O-, -OC(O)NH- und/oder -OC(O)O- unterbrochen sein kann und/oder weitere funktionelle Gruppen wie -OH, - NH₂, -NHR¹, SH, Halogen aufweisen kann, ist,
      und anschließende
b) Entfernung von überschüssigem Alkohol und Wasser unter gleichzeitiger Vorhärtung, bei Temperaturen von 80 - 150°C und Drücken von 100 - 400 mbar.

Nicht umgesetzter Alkohol wird somit bereits während des Verfahrens entfernt.

Die erfindungsgemäßen Aminoplastharze sind demnach in einem zweistufigen Verfahren herstellbar, wobei auf den sonst üblichen zusätzlichen Schritt der Extrusion verzichtet werden kann. Das Harz wird bereits nach der Entfernung des überschüssigen Lösungsmittels, insbesondere des überschüssigen Alkohols, erhalten. Durch den Verzicht auf den Schritt der Extrusion ist das erfindungsgemäße Harz nur zu einem geringen Grad kondensiert und weist daher ein breites Verarbeitungsfenster auf.

Vorteilhafterweise ist die in Stufe a) verwendete Aminotriazinverbindung ausgewählt aus einer Gruppe umfassend Melamin, C₁-C₅₀-alkylsubstituiertes Melamin, C₅-C₂₀-cycloalkylsubstituiertes Melamin, Guanamin oder Benzoguanamin. Besonders bevorzugt werden Melamin, Acetoguanamin und Benzoguanamin oder beliebige Mischungen davon verwendet.

Bevorzugt als Aldehyd werden C₁- bis C₁₂-Aldehyde eingesetzt, die eine oder mehrere Aldehydgruppen aufweisen, besonders geeignet sind Formaldehyd, Acetaldehyd, Glutaraldehyd, Glyoxal oder Trimethylolacetaldehyd. Die Aldehyde können dabei sowohl als wässrige Lösung als auch als Reinsubstanz verwendet werden. Als besonders geeignet haben sich 30-50%ige Formalinlösungen und para-Formaldehyd erwiesen.

Bevorzugt als Alkohol werden C₁- bis C₁₂-Alkohole eingesetzt, die eine oder mehrere Alkoholgruppen aufweisen. Besonders geeignet sind Methanol, Butanol, Hexanol, Butandiol, Trimthylolpropan oder Ethoxylate.

Wie hierin verwendet, bezeichnet der Begriff "C₁-C₅₀-Alkyl" Reste, wie Methyl, Ethyl, n-Propyl, Isopropyl, n-Butyl, Isobutyl, s-Butyl, t-Butyl, Amyl, t-Amyl, Hexyl, Heptyl, Octyl, Nonyl, Decyl, Undecyl, Dodecyl, und längerkettige Reste. Bevorzugte C₁-C₅₀-Alkylgruppen sind Methyl, Ethyl, Propyl, Isopropyl und Butyl.

Der Begriff "C₅-C₂₀-Cycloalkyl" umfasst u.a. die Gruppen Cyclopropyl, Cyclopentyl, Cyclohexyl, Cycloheptyl und höhergliedrige Ringe.

Der Begriff "C₅-C₂₀-Aryl", wie hierin verwendet, bezeichnet aromatische Kohlenwasserstoffe, beispielsweise Phenyl, Benzyl, Naphthyl, oder Anthryl.

Der Begriff "C₂-C₂₀-Heterocyclus" bezeichnet fakultativ substituierte Ringe mit 2-20-C-Atomen, die 1 bis 4 Heteroatome, wie etwa Sauerstoff, Schwefel und/oder Stickstoff, insbesondere Stickstoff, entweder alleine oder in Zusammenhang mit Schwefel- oder Sauerstoffringatomen haben. Diese Ringe können gesättigt oder vollständig ungesättigt oder teilweise ungesättigt sein, wobei vollständig gesättigte Ringe bevorzugt werden. Bevorzugte heterozyklische Ringe schließen Piperidinyl, Morpholinyl, Piperazinyl, 2-Amino-Imidazoyl, Tetrahydrofurano, Pyrrolo, Tetrahydrothiophenyl ein.

Der Begriff "C₂-C₂₀-Alkenyl" bezeichnet einen Rest umfassend eine Doppelbindung, wobei dieser substituiert oder unsubstituiert vorliegen kann. Die Stereoisomerie ist nicht wesentlich und alle Stereoisomere können für ein jeweiliges substituiertes Alkenyl verwendet werden.

Der Begriff "C₂-C₁₂-Alkinyl", wie hier verwendet, bezeichnet einen Rest der Formel C₂-C₁₂-C≡C-. Beispiele für C₂-C₁₂-Alkinyle schließen ein: Ethinyl, Propinyl oder Propargyl, 2-Butinyl, 2-Pentinyl, 3-Pentinyl, 2-Hexinyl, 3-Hexinyl, 4-Hexinyl, 2-Heptinyl, 3-Heptinyl, 4-Heptinyl, 5-Heptinyl, sowie Octinyl, Noninyl, Decinyl, Undecinyl, Dodecinyl, sowie Di- und Tri-ine von geraden und verzweigten Alkylketten. Bevorzugt sind solche Alkinylreste, bei denen die Dreifachbindung endständig ist.

Der Begriff "substituiert", in Verwendung mit "Alkyl", "Alkenyl" etc., bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, geschütztes Oxo, C₃-C₇-Cycloalkyl, Phenyl, Naphtyl, Amino, geschütztes Amino, monosubstituiertes Amino, geschütztes monosubstituiertes Amino, disubstituiertes Amino. Weitere Substituenten sind generell denkabr. Die substituierten Alkygruppen, Arylgruppen, Alkenylgruppen, können einmal oder mehrfach substituiert sein und bevorzugt 1- oder 2-mal, mit denselben oder unterschiedlichen Substituenten. Das molare Verhältnis von Aminotriazinverbindung zu Aldehyd in Stufe a) weist einen Wert von 1:1,3 bis 1:3 auf.

Des Weiteren ist es von Vorteil, wenn das molare Verhältnis von Alkohol zu Aminoplastbildner in Stufe a) einen Wert von 1:25 bis 15:1, bevorzugt 1:5 bis 10:1 aufweist.

Der Feststoffgehalt des in Stufe a) gebildeten Produktes liegt zwischen 20 und 60 %, bevorzugt zwischen 32 bis 51 %.

Das erfindungsgemäße zweistufige Verfahren zur Herstellung der Harze ist gekennzeichnet durch: a) gleichzeitige Umsetzung mindestens einer Aminotriazinverbindung der allgemeinen Formel (I) mit mindestens einem Aldehyd und mindestens einem Alkohol, und b)

Entfernung von überschüssigem Alkohol und Wasser unter gleichzeitiger Vorhärtung bei Temperaturen von 80-150°C und Drücken von 100-400 mbar.

Die Umsetzung in Stufe a) erfolgt dabei vorteilhafterweise bei Temperaturen von 80-150 °C. Dabei kann sowohl eine konstante Temperatur während der gesamten Umsetzung vorliegen als auch ein Temperaturprofil durchlaufen werden.

Bei Durchführung des Verfahrens in einem Dünnfilmverdampfer erfolgt die Umsetzung in zwei hintereinander geschalteten Dünnfilmverdampfern. Ein erster Dünnfilmverdampfer wird bei 80 bis 130°C betrieben, wohingegen der zweite Dünnfilmverdampfer in Abhängigkeit vom Durchsatz bei 130 bis 150°C betrieben wird. In einer bevorzugten Ausführungsform liegt die Temperatur im ersten Dünnfilmverdampfer bei einem Durchsatz von 50 kg/h Aminoplastharz bei 120°C und im zweiten Dünnfilmverdampfer bei 135°C. Bei einem Durchsatz von 60kg/h Aminoplastharz liegt die Temperatur im ersten Dünnfilmverdampfer hingegen bei 130°C und im zweiten Dünnfilmverdampfer bei 140°C.

In der Stufe a) liegt bei der Umsetzung bevorzugt ein Druck von 1-16 bar vor, wobei sowohl ein konstanter Druck während der gesamten Umsetzung anliegt, als auch ein Druckprofil durchlaufen werden kann. Der Druck ist dabei abhängig von der Temperatur, da sich der Dampfdruck des während der Umsetzung verwendeten Lösungsmittels einstellt und kein zusätzlicher Druck aufgegeben wird.

Mit Vorteil liegt in der Stufe a) ein pH-Wert von 5,3-7,8, insbesondere ein pH-Wert von 5,5-6,9 vor. Die Einstellung des pH-Wertes erfolgt bevorzugt durch Zugabe einer organischen oder anorganischen Säure, eines Ionentauscherharzes oder eines Zeolithen. Beispiele für geeignete Säuren sind Salzsäure, Salpetersäure, Schwefelsäure, Ameisensäure oder Essigsäure. Beispiele für geeignete Ionentauscher sind chlormethylierte und Trimethylamin-aminierte Copolymere aus Styren und Divinylbenzen, sulfonierte Copolymere aus Styren und Divinylbenzen und m-Phenylendiamin-Formaldehyd-Copolymere.

In einer Ausführungsform wird das Reaktionsprodukt nach Stufe
a) durch Erhöhung des pH-Wertes, bevorzugt auf pH>8,5, stabilisiert. Beispiele für geeignete Laugen sind Natronlauge und Kalilauge.
   Als Reaktoren zur Durchführung der Verfahrensstufe a) sind Rührreaktoren mit Bodenablass und absteigendem Kühler geeignet.
   Geeignete Apparate zur Entfernung von überschüssigem Alkohol und gebildetem Wasser unter gleichzeitiger Vorhärtung in Stufe
b) sind zum Beispiel Dünnschichtverdampfer, Fallfilmverdampfer, Kurzwegfilmverdampfer oder Verdampfer für Medien hoher Viskosität der Firma List.

Besonders geeignet sind die erfindungsgemäßen Harze für die Herstellung von Fasern, Fibriden, Vliesen oder Geweben, nach dem Fachmann bekannten Spinnverfahren. Insbesondere können die erfindungsgemäßen Harze im so genannten "Melt Blow"-Verfahren zu Vliesstoffen (non-woven) verarbeitet werden. Ferner sind die erfindungsgemäßen Harze auch zur Verwendung als Bindemittel und/oder Zuschlagstoff in Wood Plastic Composites (WPC), Pressmassen oder Formmassen geeignet.

Wie erwähnt sind die erfindungsgemäßen Aminoplastharze insbesondere zur Herstellung von Vliesen, insbesondere Feinstfaservliesstoffen geeignet.

Der Feinstfaservliesstoff aus thermoplastisch verarbeitbaren Aminoplastharzen, bevorzugt Melaminharzen ist insbesondere durch den Durchmesser der ihn konstituierenden Fasern sowie die Dichte deren Verknüpfung gekennzeichnet. Zur Beschreibung der Dichte ihrer Verknüpfung (Faserstruktur) werden dabei die folgenden Größen definiert.

Verzweigungspunkte: Ein Verzweigungspunkt ist ein solcher Punkt, an dem zwei oder mehr in ihrer jeweiligen Längsrichtung laufende Fasern an einem Punkt zusammenlaufen und durch Verschmelzen physisch miteinander verbunden sind. Die mittlere Anzahl von Verzweigungspunkten pro Flächeneinheit wird mit N_{P} bezeichnet. Bei Bezug auf die Flächeneinheit eines Quadratmillimeters wird dieser Parameter mit N_{P_mm} bezeichnet.

Verzweigungsarme: Ein Verzweigungsarm ist der jeweils zwischen zwei Verzweigungspunkten laufende, durch keine weiteren Verzweigungspunkte unterbrochene Arm einer Faser. Die mittlere Anzahl von Verzweigungsarmen pro Flächeneinheit wird mit N_{A} bezeichnet. Bei Bezug auf die Flächeneinheit eines Quadratmillimeters wird dieser Parameter mit N_{A_mm} bezeichnet.

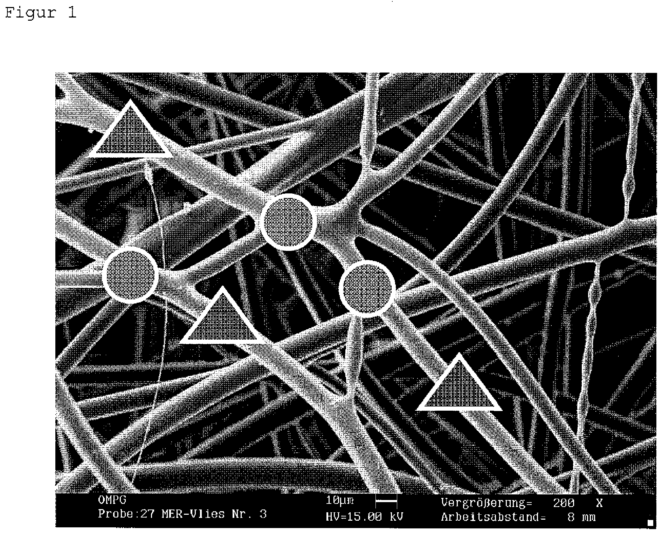

Beispielhaft ist in Fig. 1 eine elektronenmikroskopische Aufnahme einer Ausführungsform des erfindungsgemäßen Feinstfaservliesstoffes gezeigt. Verzweigungspunkte sind durch Kreise sowie Verzweigungsarme durch Dreiecke gekennzeichnet.

Zur Bestimmung der Verzweigungsparameter können elektronenmikroskopische Aufnahmen eines Feinstfaservliesstoffes ausgewertet werden. Es werden dabei Verzweigungsarme und Verzweigungspunkte der obersten, dem Betrachter zugewandten Lage gezählt. Dabei ist es sinnvoll, die Parameter, insbesondere die Anzahl der Verzweigungsarme und die Anzahl der Verzweigungspunkte, über statistische Verfahren zu mitteln.

Der Feinstfaservliesstoff kann ein Netzwerk aufweisen, welches zwischen 1 und 1000 n_{A} Verzweigungsarme und zwischen 1 und 300 n_{P} Verzweigungspunkte pro Quadratmillimeter enthält. Bevorzugt sind dabei solche Feinstfaservliesstoffe, welche einen mittleren Faserdurchmesser 0,1 bis 100 Mikrometer, bevorzugt von 0,5 bis 40 Mikrometer, weiter bevorzugt von 0,5 bis 20 Mikrometer, am meisten bevorzugt von 0,5 bis 10 Mikrometer, aufweisen.

Der mittlere Faserdurchmesser ist dabei der Durchschnitt der Faserdurchmesser der Fasern, die zur Ermittlung der Verzweigungsparameter herangezogen wurden.

In einer Ausführungsform wird der so beschreibbare Feinstfaservliesstoff aus den erfindungsgemäßen thermoplastisch verarbeitbaren Aminoplastharzen hergestellt.

Ein so beschreibbarer Feinstfaservliesstoff kann aber auch in einer weiteren Ausführungsform aus veretherten Melamin-Harz, wie es beispielsweise in der WO2006/100041 beschrieben ist, hergestellt werden. Gegenüber dem dort gezeigten Verfahren wird der Feinstfaservliesstoff allerdings durch ein verbessertes Verfahren erhalten.

Beim hier beschriebenen Verfahren handelt es sich um ein modifiziertes Melt Blown-Verfahren, das sich insbesondere durch Menge und Art eines Verarbeitungsadditiv oder die Geometrie der verwendeten Spinndüsen oder die Blasluftmenge und -temperatur oder die Luftfeuchte oder die Härtergaskonzentration und Verweilzeit im Sorptionstunnel oder die Zeit- und Temperaturführung der Nachbehandlung oder eine Kombination dieser Größen charakterisieren lässt.

Das Verfahren wird in einer Anlage durchgeführt, die aus mehreren Modulen besteht. Die Fasern werden beispielsweise auf einem kontinuierlichen Siebband oder einer Siebtrommel abgeschieden.

Obwohl die erfindungsgemäßen Aminoplastharze oder die Harze, die gemäß der WO 2006/100041 hergestellt wurden, thermoplastisch verarbeitbar sind, kann es bei ihrer Anwendung bei sehr langen Verweilzeiten, die insbesondere in Toträumen der schmelzeführenden Anlagenteile auftreten, zu Vernetzungen, d.h. zur Erhöhung der Viskosität bis zur Verfestigung, kommen.

Es wurde gefunden, dass dieses Problem durch Zugabe von Alkoholen, insbesondere niedermolekularen Alkoholen wie z.B. Methanol oder Butanol, weitestgehend gelöst werden kann. Demzufolge ist es von Vorteil, der Schmelze der erfindungsgemäßen Aminoplastharze oder der Harze, die gemäß der WO 2006/100041 hergestellt wurden, im Extruder niedermolekulare Alkohole zuzumischen. Dadurch wird die Viskosität des Harzes erniedrigt und die Verarbeitungsstabilität des Harzes weiter erhöht.

Durch die Zumischung der niedermolekularen Alkohole werden die Viskosität und der Erweichungspunkt der Harze erniedrigt. Die Erniedrigung der Viskosität ist erwünscht, da einerseits die Verarbeitungstemperatur abgesenkt, andererseits aber der Faserdurchmesser reduziert werden kann.

Ein niedriger Erweichungspunkt bzw. eine niedrige Glasübergangstemperatur Tg der Harze führt dazu, dass die Wirrlage von Feinstfasern bei der Abscheidung auf dem Siebband auf unkontrollierbare Weise verklebt. Es ist nicht möglich, weiche wenig oder nicht miteinander verklebte Vliese herzustellen.

Es wurde gefunden, dass durch geeignete Temperaturführung im Schmelzeblasschacht die niedermolekularen Alkohole aus den Feinstfasern entfernt und die Verklebungsneigung zurückgedrängt werden kann.

Dazu wird die Temperatur vorteilhafterweise im oberen Teil zwischen 100°C und 250°C, im unteren Teil zwischen 30°C und 50°C eingestellt.

Im unteren Teil des Schmelzeblasschachtes wird durch Zumischung kalter Sekundärluft die Temperatur der Faser-Luftmischung auf eine Temperatur zwischen 30°C und 50°C abgesenkt.

Überflüssige Luft kann über die Abluftöffnungen entweichen.

Gemäß einem Aspekt der vorliegenden Erfindung wird eine Aminoplastharzschmelze, insbesondere eine Melaminharzschmelze, die beispielsweise in einem Extruder aufgeschmolzen wird, durch Spinndüsen gedrückt. Die Düsen befinden sich in der Spitze von Kegeln (Winkel der Kegel von 10° bis 90°), an denen heiße Luft mit einer Temperatur zwischen 150°C und 300°C mit hoher Geschwindigkeit entlangströmt. Vorzugsweise ist die Temperatur der Blasluft 200°C bis 250°C. Die Kontrolle der relativen Feuchte der Blasluft hat dabei einen wichtigen Einfluss auf die spätere Vernetzbarkeit des entstehenden Vlieses.

Gemäß einem weiteren Aspekt der Erfindung werden dabei Spinndüsen verwendet, welche sich durch einen Kapillardurchmesser von 0,2mm bis 1 mm, vorzugsweise von 0,4 mm bis 0,7 mm, bei einer Kapillarlänge von ca. 1 mm auszeichnen. Diese Düsenparameter erlauben das Erspinnen von dünneren Fasern.

Solche Fasern geringeren Durchmessers führen in Kombination mit der besonderen Raumstruktur, die durch die vorstehend genannten Werte für Verzweigungsarme und Verzweigungspunkte pro Flächeneinheit charakterisiert ist, zu Vliesstoffen deutlich erhöhter Elastizität.

Vorteilhafterweise wird bei diesem Verfahren trockene Luft eingesetzt. In Anwesenheit von feuchter Luft kommt es in der Folge zu einer zu hohen Verdichtung der Fasern, begleitet von einem Verlust der vorteilhaften mechanischen Eigenschaften des Vlieses.

Die Feinstfasern werden mit der Blasluft, die sich mit Umgebungsluft mischt, in einem Verwirbelungsschacht auf ein Siebband als Faserabscheider geblasen. Die Luft wird mit einem Sauggebläse, welches sich unter dem Siebband befindet, abgesaugt. Durch das Siebband werden die Feinstfasern vom Luftstrom getrennt und als Wirrlage zu einem lockeren Vlies auf dem Siebband abgelegt. Die Nennleistung der Luftabsaugung beträgt ein Mehrfaches der Blasluftmenge. Dabei wird das Verhältnis von Blasluft und Absaugmenge so eingestellt, dass sich die Feinstfasern auf ca. 50°C abkühlen können.

Die gebildeten Feinstfasern weisen eine ungeordnete kleinteilige Kräuselstruktur auf, welche die Vliesbildung und den Vlieszusammenhalt fördert.

Das lockere Vlies wird gegebenenfalls verdichtet und über ein Siebband in ein Sorptionsmodul gefördert. In einem Sorptionstunnel wird die Feinstfaserwirrlage von gasförmiger HCl enthaltener Umluft durchströmt. Dabei wird eine definierte HCl-Menge von den Feinstfasern aufgenommen. Der HCl-Gehalt der Umluft beträgt 0,0 bis 5 Vol%, vorzugsweise 0,0 bis 3,5 Vol%, am meisten bevorzugt 0,0 bis 0,5 Vol%. Die HCl-Konzentration im Begasungsraum wird in Echtzeit gemessen und durch Verändern der zudosierten Menge HCl geregelt.

Der Sorptionstunnel wird mit einem geringen Unterdruck betrieben, um sicherzustellen, dass keine HCl-haltige Luft austritt. Dieser Unterdruck führt dazu, dass an den Vlieseintritts- und Austrittsöffnungen des Sorptions- und Neutralisationstunnels Luft angesaugt wird. Da Luftfeuchtigkeit zur unkontrollierten Verklebung des Vlieses führen kann, können sich an den Vlieseintritts- und Vliesaustrittsöffnungen des Sorptions- bzw. Neutralisierungstunnels Kammern befinden, welche mit trockener Luft beaufschlagt werden.

Nach Durchfahren des Sorptionstunnels wird die Feinstfaserwirrlage auf dem Siebband weiter in den Neutralisationstunnel gefördert. Dort wird das Vlies mit trockener Luft durchströmt, die gemäß einer bevorzugten Ausführungsform Ammoniak zur Neutralisierung enthält. Dadurch wird zwischen den Feinstfasern befindliches HCl neutralisiert.

Die gemäß den vorstehend gemachten Angaben hergestellte Feinstfaserwirrlage wird in einem weiteren Schritt nachbehandelt. Dabei wird in einem Härtungstunnel die Wirrlage nach einem vorgegebenen Regime über eine kontrollierte Zeit hinweg in zwei Stufen einer höheren Temperatur ausgesetzt.

Die Gesamtverweilzeit im Härtungstunnel liegt dabei zwischen 2 und 10 Minuten. Die Temperatur wird nach Einfahren in den Härtungstunnel dabei innerhalb weniger Sekunden zunächst schrittweise auf 100°C bis 140°C erhöht und danach in einer weiteren nachfolgenden Stufe wiederum innerhalb weniger Sekunden auf 200 bis 230°C erhöht. Dabei wird die Feinstfaserwirrlage zwischen 1 und 5 Minuten der ersten Temperatur sowie zwischen 1 und 5 Minuten der zweiten, höheren Temperaturstufe ausgesetzt.

Durch die Temperaturerhöhung wird aus der aus nicht gehärtetem Melaminharz bestehenden Feinstfaserwirrlage Methanol abgespalten. Dadurch erweichen die Feinstfasern. Durch das Erweichen der Fasern wird bei geeigneter Prozessführung die Eigenverklebung der Wirrlage und damit die Bildung eigenverfestigter Vliesstrukturen unterstützt. Durch die Erhöhung der Temperatur in der zweiten Temperaturstufe vernetzen die Feinstfasern weiter, und die mechanische Festigkeit der entstehenden Vliesstruktur nimmt zu.

Zweckmäßigerweise wird in einem weiteren Verfahrensschritt, der auch als räumlich und/oder zeitlich getrennter Nachbehandlungsschritt ausgeführt werden kann, das im Härtungstunnel gebildete Feinstfaservlies mit einem Siebband in einen Tempertunnel gefördert. Dort wird die Temperatur schrittweise auf eine Endtemperatur von 240-300°C erhöht. Vorzugsweise wird diese Temperaturerhöhung über 2 bis 20 Minuten ausgeführt; dabei liegt die Verweilzeit im Tempertunnel zwischen 2 und 20 Minuten. Zur Erzielung einer hohen Verweilzeit kann der Tempertunnel als Mehretagenapparat ausgeführt sein. In dieser letzten Stufe härtet das hergestellte Feinstfaservlies vollständig aus.

Gemäß einer bevorzugten Ausführungsform der vorliegenden Erfindung wird das durch Melt-Blown, HCl-Härtung, Temperatur-Härtung und Tempern erhaltene Feinstfaservlies durch einen Vernadelungsschritt weiter verfestigt und anschließend auf Rollen gewickelt.

Ein wichtiger Parameter für die Eigenschaften des hergestellten Vlieses ist die Konzentration von HCl im Sorptionsmodul sowie die Verweilzeit der hergestellten Feinstfaserwirrlage in diesem Modul. Die HCl-Konzentration in der Umluft sowie die Verweildauer der Wirrlage im genannten Modul sind entscheidend für die thermische Belastbarkeit des hergestellten Feinstfasermaterials. Diese wird über thermogravimetrische Bestimmung ermittelt. Die höchste Zersetzungstemperatur von 400 bis 405 °C wird mit einer geringen HCl-Konzentration (0 bis 0,3 Vol%) und einer kurzen Verweilzeit im HCl-Modul (ca. 1 Minute) erzielt.

Der Temperschritt von 2 bis 20 Minuten hat zur Folge, dass das Vlies eine deutliche Erhöhung seiner feinheitsbezogenen Reißkraft um ca. 30% gegenüber dem unbehandelten Vlies erfährt.

Weiterhin ist überraschend, dass das so herstellbare Vlies im Gegensatz zu den aus dem Stand der Technik bekannten Vliesen vernadelt werden kann.

Die Erfindung wird weiter charakterisiert durch die folgenden Figuren und Beispiele. Dabei zeigen:
- Fig. 1: eine Rasterelektronenmikroskopische Aufnahme (REM) einer Ausführungsform des erfindungsgemäßen Feinstfaservliesstoffes. Verzweigungspunkte sind durch Kreise sowie Verzweigungsarme durch Dreiecke gekennzeichnet.
- Fig. 2: eine weitere Rasterelektronenmikroskopische Aufnahme (REM) einer Ausführungsform des erfindungsgemäßen Feinstfaservliesstoffes.

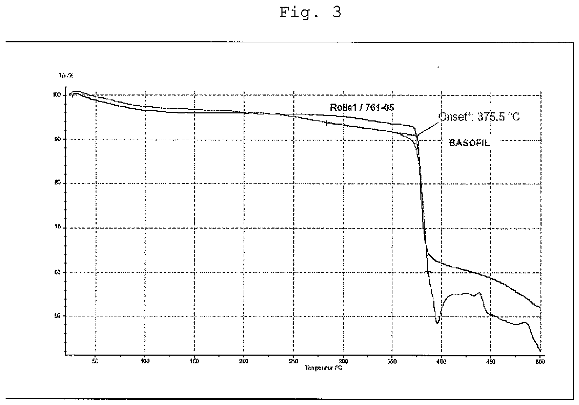

- Fig. 3: die thermogravimetrische Bestimmung der Zersetzungstemperatur des in Beispiel 2 hergestellten Vlieses;
- Fig. 4: ein Fließschema einer Ausführungsform einer Spinnanlage mit einem Spinnmodul;
- Fig. 5: eine schematische Darstellung des Spinnbalkens;
- Fig. 6: eine Ansicht einer Ausführungsform des Spinnbalkens von unten.
- Fig. 7: eine schematische Darstellung des Schmelzeblasschachtes gemäß einem Ausführungsbeispiel

### Beispiel 1: Herstellung eines ersten thermoplastisch verarbeitbaren Aminoplastharzes

### 1.1. Herstellung der Polyaminotriazinether

In einem 100 1 Rührreaktor wird durch Eintragen von 20,0 kg Melamin, 38,1 kg Methanol und als Aldehydkomponente 25,7 kg Formaldehyd (37%ig) methanolstabilisiert sowie 0,08 kg p-Toluolsulfonsäure ein Reaktionsgemisch hergestellt.

Dieses Reaktionsgemisch wird bei einer Reaktionstemperatur von 90°C und einer Gesamtreaktionszeit von 35 min umgesetzt, wobei 25 min bis zum Klarpunkt verstreichen und die weitere Kochzeit nach dem Klarpunkt bei 10 min liegt. Der Reaktionsfortschritt wird begleitend mit NIR bei 220 nm gemessen.

Nach der Gesamtkochzeit von 35 min wird auf 40°C abgekühlt. Der pH-Wert liegt nun typisch bei 6,8. Durch Zugabe von 20%iger Kalilauge wird ein pH-Wert von 10 eingestellt. Der Feststoffgehalt liegt bei 38%. Dieses erhaltene Harzsirup wird bei RT gelagert.

### 1.2. Aufkonzentrierung der Polyaminotriazinether

Das im Wasser-Methanol-Gemisch gelöste veretherte Aminotriazinharzkondensat wird vom Lagerbehälter mittels Membranpumpe mit 50kg/h in einen ersten Vakuumdünnfilmverdampfer überführt, in dem die Lösung des veretherten Aminotriazinharzkondensats bei 125°C und 150 mbar zu einer hochkonzentrierten Aminotriazinharzlösung, die einen Feststoffanteil von 60 Masse% und einen Gehalt an Wasser/Methanol von 40 Masse% besitzt, eingeengt wird.

Nachfolgend wird die hochkonzentrierte Lösung des veretherten Aminotriazinharzes in einen zweiten Vakuumdünnfilmverdampfer überführt und bei 135°C zu einer Schmelze eingeengt, die einen Feststoffanteil von 99 Masse% und einen Gehalt an Wasser/Methanol von 1 Masse% besitzt.

Diese Schmelze wird sogleich nach dem 2. Vakuumdünnfilmverdampfer mit einer Schmelzepumpe zu einem Walzengranulator gepumpt und dort auf RT gekühlt. Es entstehen Schuppen von ca. 10 mm Größe und 0,5 mm Dicke. Die Glasübergangstemperatur liegt bei 60°C. Die Molekulargewichte liegen bei Mw=300g/mol. Die Viskosität der so erhaltenen Harze beträgt bei 130°C ca. 30 bis 40 Pas und steigt über einen Zeitraum von 50 min auf maximal 70 Pas.

### Beispiel 2: Herstellung eines zweiten thermoplastisch verarbeitbaren Aminoplastharzes

### 2.1. Herstellung der Polyaminotriazinether

In einem 100 1 Rührreaktor wird durch Eintragen von 20,0 kg Melamin, 38,1 kg Methanol, 0,82 kg Trimethyolopropan und als Aldehydkomponente 25,7 kg Formaldehyd (37%ig) methanolstabilisiert sowie 0,08 kg p-Toluolsulfonsäure ein Reaktionsgemisch hergestellt.

Dieses Reaktionsgemisch wird bei einer Reaktionstemperatur von 90°C und einer Gesamtreaktionszeit von 35 min umgesetzt, wobei 25 min bis zum Klarpunkt verstreichen und die weitere Kochzeit nach dem Klarpunkt bei 10 min liegt. Der Reaktionsfortschritt wird begleitend mit NIR bei 220nm gemessen.

Nach der Gesamtkochzeit von 35 min wird auf 40°C abgekühlt. Der pH-Wert liegt nun bei 6,8. Durch Zugabe von 20%iger Kalilauge wird ein pH-Wert von 10 eingestellt. Der Feststoffgehalt liegt bei 39%. Dieses erhaltene Harzsirup wird bei RT gelagert.

### 2.2. Aufkonzentrierung der Polyaminotriazinether

Das im Wasser-Methanol-Gemisch gelöste veretherte Aminotriazinharzkondensat wird vom Lagerbehälter mittels Membranpumpe in einen ersten Vakuumdünnfilmverdampfer mit 50 kg/h überführt, in dem die Lösung des veretherten Aminotriazinharzkondensats bei 125°C und 150 mbar zu einer hochkonzentrierten Aminotriazinharzlösung, die einen Feststoffanteil von 60 Masse% und einen Gehalt an Wasser/Methanol von 40 Masse% besitzt, eingeengt wird.

Nachfolgend wird die hochkonzentrierte Lösung des veretherten Aminotriazinharzes in einen zweiten Vakuumdünnfilmverdampfer überführt und bei 135°C zu einer Schmelze eingeengt, die einen Feststoffanteil von 99 Masse% und einen Gehalt an Wasser/Methanol von 1 Masse% besitzt.

Diese Schmelze wird sogleich nach dem 2. Vakuumdünnfilmverdampfer mit einer Schmelzepumpe zu einem Walzengranulator gepumpt und dort auf RT gekühlt. Es entstehen Schuppen von ca. 10 mm Größe und 0,5 mm Dicke. Die Glasübergangstemperatur liegt bei 50°C. Die Molekulargewichte liegen bei Mw=400g/mol. Die Viskosität der so erhaltenen Harze beträgt bei 130°C ca. 15 bis 20 Pas und steigt über einen Zeitraum von 55 min auf maximal 60 Pas.

### Beispiel 3: Herstellung eines dritten thermoplastisch verarbeitbaren Aminoplastharzes

### 3.1. Herstellung der Polyaminotriazinether

In einem 100 1 Rührreaktor wird durch Eintragen von 19,15 kg Melamin, 31,0 kg Methanol, 0,726 kg Trimethyolopropan und als Aldehydkomponente 30,8 kg Formaldehyd (37%ig) methanolstabilisiert sowie 0,08 kg p-Toluolsulfonsäure ein Reaktionsgemisch hergestellt.

Dieses Reaktionsgemisch wird bei einer Reaktionstemperatur von 90°C und einer Gesamtreaktionszeit von 45 min umgesetzt, wobei 15 min bis zum Klarpunkt verstreichen und die weitere Kochzeit nach dem Klarpunkt bei 30 min liegt. Der Reaktionsfortschritt wird begleitend mit NIR bei 220nm gemessen.

Nach der Gesamtkochzeit von 45 min wird auf 40°C abgekühlt. Der pH-Wert liegt nun bei 6,6. Durch Zugabe von 20%iger Kalilauge wird ein pH-Wert von 10 eingestellt. Der Feststoffgehalt liegt bei 34%. Dieses erhaltene Harzsirup wird bei RT gelagert.

### 3.2. Aufkonzentrierung der Polyaminotriazinether

Das im Wasser-Methanol-Gemisch gelöste veretherte Aminotriazinharzkondensat wird vom Lagerbehälter mittels Membranpumpe in einen ersten Vakuumdünnfilmverdampfer mit 50 kg/h überführt, in dem die Lösung des veretherten Aminotriazinharzkondensats bei 125°C und 150 mbar zu einer hochkonzentrierten Aminotriazinharzlösung, die einen Feststoffanteil von 60 Masse% und einen Gehalt an Wasser/Methanol von 40 Masse% besitzt, eingeengt wird.

Nachfolgend wird die hochkonzentrierte Lösung des veretherten Aminotriazinharzes in einen zweiten Vakuumdünnfilmverdampfer überführt und bei 135°C zu einer Schmelze eingeengt, die einen Feststoffanteil von 99 Masse% und einen Gehalt an Wasser/Methanol von 1 Masse% besitzt.

Diese Schmelze wird sogleich nach dem 2. Vakuumdünnfilmverdampfer mit einer Schmelzepumpe zu einem Walzengranulator gepumpt und dort auf RT gekühlt. Es entstehen Schuppen von ca. 10 mm Größe und 0,5 mm Dicke. Die Glasübergangstemperatur liegt bei 50°C. Die Molekulargewichte liegen bei Mw=600g/mol. Die Viskosität der so erhaltenen Harze beträgt bei 130°C ca. 15 bis 20 Pas und steigt über einen Zeitraum von 40 min auf maximal 65 Pas.

### Beispiel 4: Herstellung eines vierten thermoplastisch verarbeitbaren Aminoplastharzes

### 4.1. Herstellung der Polyaminotriazinether

In einem 100 1 Rührreaktor wird durch Eintragen von 37,9 kg Melamin,12,7 kg vollentsalzetes Wasser, 8,93 kg Trimethyolopropan, 5,16 kg wässrige 0,75%ge Kalilauge und als Aldehydkomponente 34,3 kg Formaldehyd (36,5%ig) melaminstabilisiert ein Reaktionsgemisch hergestellt.

Dieses Reaktionsgemisch wird bei einer Reaktionstemperatur von 115°C und einer Gesamtreaktionszeit von 25 min umgesetzt, wobei der Klarpunkt bei Erreichen der Reaktionstemperatur eintritt (gemessen mit NIR 220nm) und die weitere Kochzeit nach dem Klarpunkt bei 25 min liegt. Der Reaktionsdruck beträgt 1,4 bar.

Nach der Gesamtkochzeit von 20 min wird auf 40°C abgekühlt. Der pH-Wert liegt nun bei 9,3. Der Feststoffgehalt liegt bei 59% und die Wasserverträglichekeit bei 0,9-1,1. Dieses erhaltene Harzsirup kann bei RT für maximal 7 Tage gelagert werden.

### 4.2. Aufkonzentrierung der Polyaminotriazinether

Das im Wasser-Methanol-Gemisch gelöste veretherte Aminotriazinharzkondensat wird vom Lagerbehälter mittels Membranpumpe in einen ersten Vakuumdünnfilmverdampfer mit 35 kg/h überführt, in dem die Lösung des veretherten Aminotriazinharzkondensats bei 130°C und 950 mbar zu einer hochkonzentrierten Aminotriazinharzlösung, die einen Feststoffanteil von 75 Masse% und einen Gehalt an Wasser von 25 Masse% besitzt, eingeengt wird.

Nachfolgend wird die hochkonzentrierte Lösung des Aminotriazinharzes in einen zweiten Vakuumdünnfilmverdampfer überführt und bei 135°C zu einer Schmelze eingeengt, die einen Feststoffanteil von 98,5 - 99,0 Masse% und einen Gehalt an Wasser von 1,0 - 1,5 Masse% besitzt.

Diese Schmelze wird sogleich nach dem 2. Vakuumdünnfilmverdampfer mit einer Schmelzepumpe zu einem Walzengranulator gepumpt und dort auf RT gekühlt. Es entstehen Schuppen von ca. 10 mm Größe und 0,5 mm Dicke. Die Glasübergangstemperatur liegt bei 60°C. Die Molekulargewichte liegen bei Mw=200g/mol. Die Viskosität der so erhaltenen Harze beträgt bei 130°C ca. 10 bis 15 Pas und steigt über einen Zeitraum von 30 min auf maximal 75 Pas.

### Beispiel 5: Herstellung eines druckelastischen duroplastischen Vlieses

Mit einem Doppelschneckenextruder "Eurolab 16" der Firma THERMO PRISM wird das Harz nach Beispiel 1 bei einer Arbeitstemperatur von 130°C aufgeschmolzen, die Schmelze über einen Kanal drei 4fach Spinnpumpen zugeführt und anschließend durch 12 Meltblowneinzeldüsen, welche über eine Breite von 30 cm angeordnet sind, mit einem Gesamtdurchsatz von 24,1 g/min gepresst. Die Düsenkapillaren haben einen Durchmesser von 0,7 mm und eine Länge von 5mm. Die Blasluft hat eine Temperatur von 215°C und einen Vordruck von 2 bar. Das die Meltblowndüsen verlassende Gemisch von Blasluft und den gebildeten Melaminharzfasern wird in einem Abstand von 55 cm auf ein sich mit einer Geschwindigkeit von 1,2 m/min bewegendes Siebband geleitet, und die Fasern werden zu einem lockeren Vlies abgelegt. Das Vlies wird anschließend 30 s von 0,5% HCl-Gas enthaltender trockener Luft durchströmt und danach das in den Faserzwischenräumen befindliche HCl-Gas/Luftgemisch durch Luft, die maximal 5% relative Feuchte aufweist, ausgetauscht. Nach einer Ruhepause von 20 min wird das Vlies innerhalb von 30 min von Raumtemperatur auf 260°C erwärmt und dabei durchgehärtet. Der erhaltene Vlieskörper ist stark vernetzt und besitzt ein ausgeprägtes druckelastisches Verhalten mit einer Wiedererhohlung von 100% bei einer einminütigen Belastung von 10g/cm².

Die Herstellung des HIPE®ESIN MER-Vlieses erfolgte bei einer Raumluft von 23°C und 42% rel. Luftfeuchte.

Die Struktur des ausgehärteten Vlieskörpers zeigt nachfolgende REM-Aufnahme (Fig. 1). Nach der oben beschriebenen Methode beträgt die Anzahl der Verzweigungspunkte 153/mm²; die Anzahl der Verzweigungsarme liegt bei 476/mm².

Figur 1 zeigt eine REM-Aufnahme (200 fache Vergrößerung) eines Musters gemäß Beispiel 1. Die Fasern weisen einen Durchmesser von ca. 10µm und kleiner auf. Beispielhaft sind Verzweigungspunkte durch Kreise und Verzweigungsarme durch Dreiecke symbolisiert.

### Beispiel 6: Herstellung eines textilen duroplastischen Vlieses

Mit einem Doppelschneckenextruder "Eurolab 16" der Firma THERMO PRISM wird ein Harz nach Beispiel 3 bei einer Arbeitstemperatur von 135°C aufgeschmolzen, die Schmelze über einen Kanal drei 4fach Spinnpumpen zugeführt und anschließend durch 12 Meltblowneinzeldüsen, welche über eine Breite von 30 cm angeordnet sind, mit einem Gesamtdurchsatz von 21 g/min gepresst. Die Düsenkapillaren haben einen Durchmesser von 0,4 mm und eine Länge von 5mm. Die Blasluft hat eine Temperatur von 213°C und einen Vordruck von 3 bar. Das die Meltblowndüsen verlassende Gemisch von Blasluft und den gebildeten HIPE®ESIN MER-Fasern wird in einem Abstand von 80 cm auf ein sich mit einer Geschwindigkeit von 0,7 m/min bewegendes Siebband geleitet, und die HIPE®ESIN MER-Fasern werden zu einem lockeren Vlies abgelegt. Das Vlies wird anschließend 55 sec. von 0,9% HCl-Gas enthaltener trockener Luft durchströmt und danach das in den Faserzwischenräumen befindliche HCl-Gas/Luftgemisch durch Luft die maximal 5% relative Feuchte aufweist ausgetauscht. Anschließend wird das Vlies 30 sec. mit Luft die 1% Ammoniakgas enthält durchströmt, läuft dann in einem Bandtrockner "Syntronic 100" ein und wird in der ersten Stufe auf 110°C und in einer zweiten Stufe auf 215°C erwärmt und gehärtet. Es schließt sich eine jeweils 10 minütige Temperung bei 250°C und 280°C an. Die Vliese haben einen lockeren Aufbau, sind nur an wenigen Faserkreuzpunkten verklebt und zeichnen sich durch einen textilen Griff aus. Sie lassen sich durch Vernadelung verfestigen.

Die gehärteten Fasern haben einen mittleren Titer von 1,66 dtex.

Die Faserfestigkeit ist, wie in nachfolgender Tabelle gelistet, abhängig von der thermischen Härtung und Temperung.

| Härtungs-/Temperungstemperatur | Dehnung | feinheitsbezogene Festigkeit |
|---|---|---|
| (°C) | (%) | (cN/tex) |
| 215 | 5.84 | 13, 9 |
| 250 | 5,77 | 16,3 |
| 280 | 5,70 | 19,1 |

Die Herstellung der Vliese erfolgte einer Raumluft von 26°C und 31% rel. Luftfeuchte.

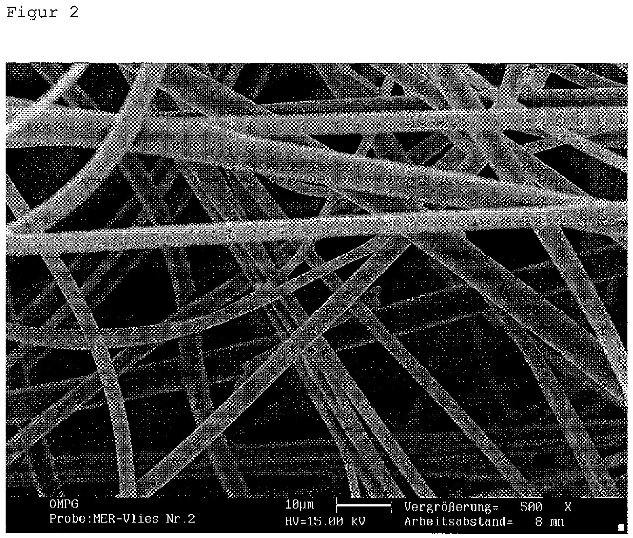

Die Struktur des ausgehärteten Vlieskörpers ist in der REM-Aufnahme (500fache Vergrößerung) in Figur 2 dargestellt. Die durchschnittliche Fasergröße liegt dabei unter 10 µm, insbesondere bei ca. 5 µm.

Die nach der oben beschriebenen Methode ermittelte Zahl der Verzweigungspunkte liegt bei 34/mm²; die Anzahl der Verzweigungsarme beträgt 102/mm².

Durch die genannte nachträgliche Wärmebehandlung der Vliese (Muster 30x30 cm) erhöhte sich, wie in vorstehender Tabelle dargestellt, die feinheitsbezogene Reißkraft um ca. ein Drittel. Parallel dazu verringerten sich Titer und Dehnung nur geringfügig.

Durch Thermogravimetrie wurde die thermische Beständigkeit des bei 280°C getemperten Musters aus Beispiel 2 ermittelt. Dabei beträgt die Zersetzungstemperatur 387 °C; der Masseverlust im Bereich von 200°C bis 387°C liegt bei ca. 4,8%.

### Beispiel 7: Herstellung eines Vlieses unter Zugabe eines Alkoholes zur Harzschmelze

Mit einem Doppelschneckenextruder "Eurolab 16" der Firma THERMO PRISM wird HIPE®ESIN MER-Granulat hergestellt gemäß WO 2006/100041 mit einem Melamin-Formaldehyd Harz mit einem Verhältnis von Melamin zu Formaldehyd von 1 : 2,5 bei einer Arbeitstemperatur von 125°C aufgeschmolzen und flüssiges Butanol in den Schmelzestrom gefördert. Die Harzschmelze wird mit geeigneten Schneckenelementen innig mit dem Butanol gemischt und über einen Schmelzekanal drei 4fach Spinnpumpen zugeführt und anschließend durch 12 Meltblowneinzeldüsen, welche über eine Breite von 30 cm angeordnet sind, mit einem Gesamtdurchsatz von 24,1 g/min gepresst. Die Düsenkapillaren haben einen Durchmesser von 0,7 mm und eine Länge von 5mm. Die Blasluft hat eine Temperatur von 215°C und einen Vordruck von 2 bar.

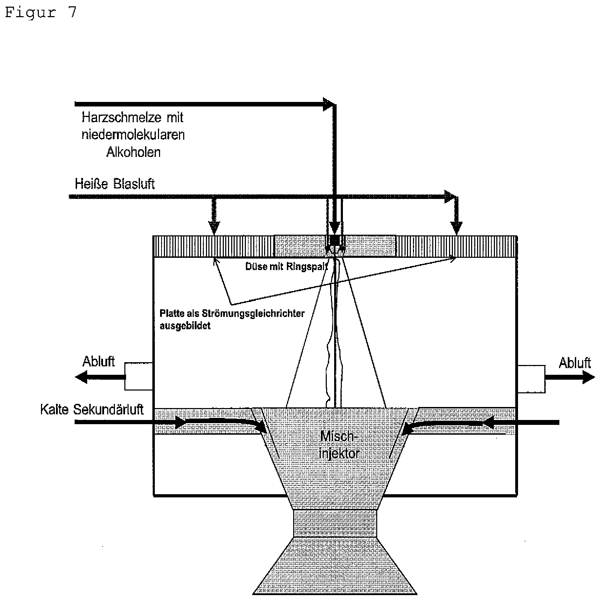

Zur Stabilisierung des Blasluft/Faserstromes wird neben der Düsenreihe über als Strömungsgleichrichter ausgebildete Platten ebenfalls heiße Blasluft (gleiche Prozessbedingungen) zugegeben (siehe Figur 7).

Überflüssige Luft kann über die Abluftöffnungen entweichen. In geringer Entfernung (10 cm bis 30 cm) von der Düse befindet sich ein Injektor, in dem der Blasluft/Faserstrom mit kalter, trockener Sekundärluft angesaugt und auf ca. 45°C abgekühlt wird (siehe Figur 7).

Das den Injektor verlassende Gemisch von Luft und den gebildeten Melaminharzfasern wird auf ein sich mit einer Geschwindigkeit von 1,2 m/min bewegendes Siebband geleitet, und die Fasern werden zu einem lockeren Vlies abgelegt. Das Vlies wird anschließend 30 s von 0,5% HCl-Gas enthaltender trockener Luft durchströmt und danach das in den Faserzwischenräumen befindliche HCl-Gas/Luftgemisch durch Luft, die maximal 5% relative Feuchte aufweist, ausgetauscht. Nach einer Ruhepause von 20 min wird das Vlies innerhalb von 30 min von Raumtemperatur auf 260°C erwärmt und dabei durchgehärtet. Der erhaltene Vlieskörper ist stark vernetzt und besitzt ein ausgeprägtes druckelastisches Verhalten mit einer Wiedererhohlung von 100% bei einer einminütigen Belastung von 10g/cm².

Die Herstellung des HIPE®ESIN MER-Vlieses erfolgte bei einer Raumluft von 23°C und 42% rel. Luftfeuchte.

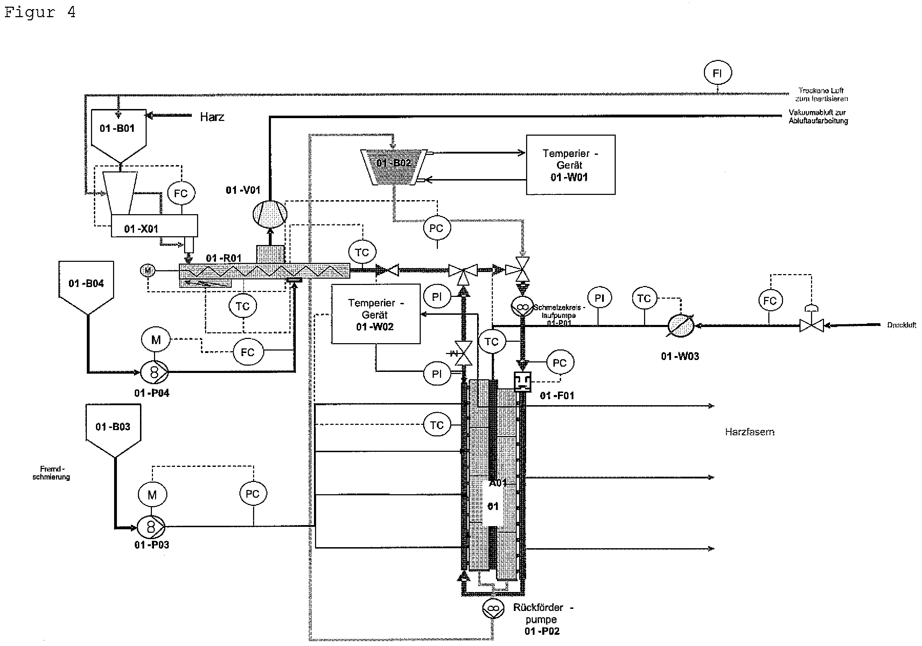

In Fig. 4 ist eine Ausführungsform einer Spinnanlage dargestellt, die ein Spinnmodul enthält das unter anderem Auch zur Herstellung der zuvor beschriebenen Feinstfaservliese und im Rahmen der beschriebenen Verfahren geeignet ist. Es wird darauf hingewiesen, dass die Ausführungsform der Spinnanlage und des Spinnmoduls nicht auf die beschriebenen Feinstfaservliese und die beschriebenen Verfahren beschränkt ist.

In einer Ausführungsform wird ein Harz z.B. des Typs "HIPE®ESIN MER 2,5F" hergestellt gemäß WO 2006/100041 in Form dosierbarer Schuppen mit mittleren Dimensionen L/H/B von 5/5/0,5 in luftdichten Säcken oder Big-Bags angeliefert und in einem Feststofflager zwischengelagert.

Die Säcke oder Big-Bags werden in einen Zwischenlagerbehälter (01-B01) entleert. Die Größe des Zwischenlagerbehälters wird so gewählt, dass er in der Nacht nicht befüllt werden muss.

Das MER wird mit einer gravimetrischen Dosiervorrichtung (01-X01) aus dem Zwischenlagerbehälter in einen Doppelschneckenextruder (01-R01) gefördert und in diesem aufgeschmolzen. Da das Harz Inhomoginitäten enthalten kann, enthält die Schnecke des Extruders herkömmliche Homogenisierelemente.

Das MER ist hygroskopisch. In Gegenwart von Wasser laufen u.U. unerwünschte Hydrolysereaktionen ab. Um Feuchtigkeitsaufnahme zu vermeiden, werden alle Ausrüstungen, in denen das Harz mit Umgebungsluft in Berührung kommen kann, z.B. der Zwischenlagerbehälter (01-B01) und die Einzugstrichter von gravimetrischer Dosierung und Extruder, mit trockener Luft überlagert.

Am Ausgang des Extruders befindet sich ein Werkzeug mit konzentrischer Bohrung (Übergang von 8 auf O), in dem die MER-Schmelze in die Eingangsrohrleitung der Schmelzepumpe gefördert wird. Die Pumpe 01-P01 fördert die Schmelze durch den Schmelzefilter 01-F01 im Kreislauf zu den Modulen des Spinnbalkens.

Nach der Pumpe 01-P01 ist ein kontinuierlich arbeitender Schmelzefilter 01-F01 angeordnet, mit dem Verunreinigungen, die entweder im angelieferten Harz bereits enthalten waren oder im schmelzeführenden System des Anlagenteiles Spinnen entstanden sind, aus dem Schmelzestrom ausgetragen werden. Da die Schmelze im Kreislauf gefahren wird, ist es wichtig, eine Anreicherung von Verunreinigungen zu vermeiden und Verunreinigungen auszutragen.

In der Kreislaufrohrleitung (in Fig. 4 durch Fettdruck hervorgehoben) ist ein Druckminderventil eingebaut, mit dem vor jeder Schmelzepumpe ein Vordruck > 20 bar gehalten werden kann.

Die Teilströme werden von der Schmelzeringleitung auf kürzestem Wege zu den Modulen des Spinnbalkens gefördert. Die MER-Schmelze wird mit den Schmelzepumpen (Typ: Planetenradpumpe mit 4 Planetenrädern) des Spinnbalkens durch die nachgeordneten Düsen gepresst.

Vor jeder Düse befindet sich ein Schmelzefilter, der weitere Verunreinigungen(Gelpartikel) zurückhält.

Die Düsen befinden sich in spitzen Kegeln (Winkel von 10° bis 90°), an denen die heiße Luft (Temperatur zwischen 150°C und 300°C) mit Geschwindigkeit z.B. zwischen 0,1 und 5 m/s, insbesondere zwischen 0,5 und 2 m/s entlangströmt. Im vorliegenden Fall wird eine Geschwindigkeit von einem 1 m/s verwendet.

Die Kegel sind gegenüber der Blasluft thermisch isoliert. Dadurch ist es möglich, die Temperatur der Blasluft, welche die Schmelze zu Feinstfasern zerbläst, weit über die Härtungstemperatur des MER zu erhöhen, wodurch besonders feintitrige Fasern entstehen, ohne dass es zu einem Zuwachsen der Düsen kommt.

Als Blasluft wird trockene Druckluft verwandt. Die Blasluft wird mit dem Wärmeübertrager 01-W03 auf eine Temperatur von 200°C bis 300 °C erwärmt. Die Temperatur der Blasluft wird geregelt.

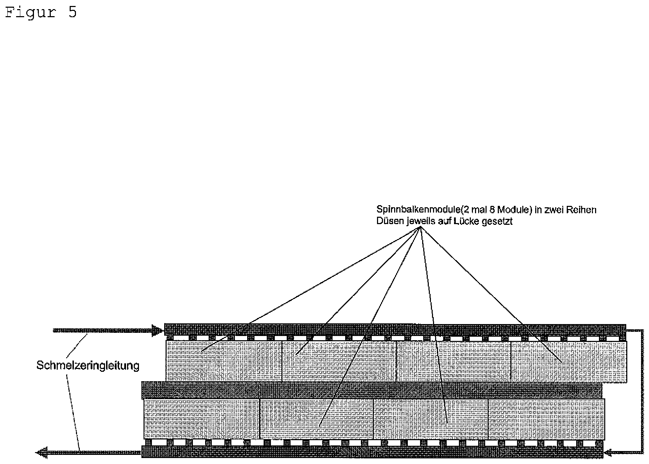

In Fig. 5 ist in schematischer Weise in Spinnbalken dargestellt (gegenüber der Fig. 4 um 90° gedreht).

Eine Ausführungsform eines Spinnbalken besteht aus Einzelmodulen mit einer Länge von je 30 cm. In der Fig. 5 sind zwei Reihen mit je vier Modulen dargestellt, die hintereinander angeordnet ist. Die Düsen der Module sind dabei gegeneinander versetzt angeordnet. Die Schmelzeversorgung der Einzelmodule erfolgt über die in Fig. 4 bereits dargestellte Ringleitung, die mit hoher Geschwindigkeit von der Schmelze durchströmt ist.

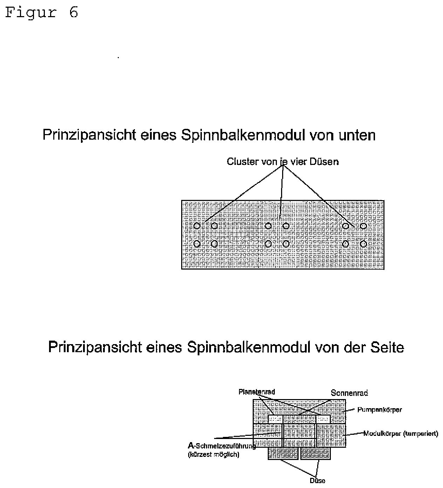

Wie aus Fig. 6 ersichtlich, ist in dieser Ausführungsform die Schmelzepumpe als eine Planetenradpumpe ausgebildet. Jeder der Schmelzepumpen hat ein Sonnenrad und vier Planetenräder, so dass insgesamt vier Pumpmechanismen vorhanden sind.

Jeder, der hier nur schematisch dargestellten Düsen ist ein Schmelzepumpmechanismus zugeordnet. Die Düsen sind in einer Art Cluster von je vier Düsen pro Planetenradpumpe angeordnet, wobei sich die Düsen nicht auf einer geraden Linie befinden.

In Fig. 6 ist eine Ausführungsform eines Teils der Spinnvorrichtung, nämlich ein Spinnmodul von unten und in der Seitenansicht dargestellt. Der Spinnmodul besteht aus drei Planetenrad-Spinnpumpen mit je 4 Zahnradpaaren, von denen eine mit A bezeichnete gleich lange Schmelzeleitungen zu den Spinndüsen führen. Die vier Spinndüsen, die jeweils einer Planetenradpumpe zugeordnet sind, befinden sich äquidistant auf einem Kreisbogen.

In Fig. 7 ist eine Ausführungsform eines Schmelzeblasschachtes dargestellt, in dem der Spinnbalken montiert ist.

Zur Stabilisierung des Blasluft/Faserstromes wird neben der Düsenreihe, die am Spinnbalken montiert ist, über als Strömungsgleichrichter ausgebildete Platten ebenfalls heiße Blasluft(gleiche Prozessbedingungen) zugegeben.

Überflüssige Luft kann über die Abluftöffnungen entweichen.

In geringer Entfernung (10 cm bis 30 cm) von der Düse befindet sich ein Injektor, in dem der Blasluft/Faserstrom mit kalter, trockener Sekundärluft angesaugt und auf ca. 45°C abgekühlt wird.

Das den Injektor verlassende Gemisch von Luft und den gebildeten Melaminharzfasern wird auf ein sich mit einer Geschwindigkeit von 1,2 m/min bewegendes Siebband geleitet, und die Fasern werden zu einem lockeren Vlies abgelegt.

## Patentansprüche

1. Verfahren zur Herstellung eines thermoplastisch verarbeitbaren Aminoplastharzes , **gekennzeichnet durch**
a) gleichzeitige Umsetzung von mindestens einer Aminotriazinverbindung der allgemeinen Formel (I) mit mindestens einem Aldehyd und mindestens einem Alkohol,
wobei die Triazinverbindung der allgemeinen Formel (I) 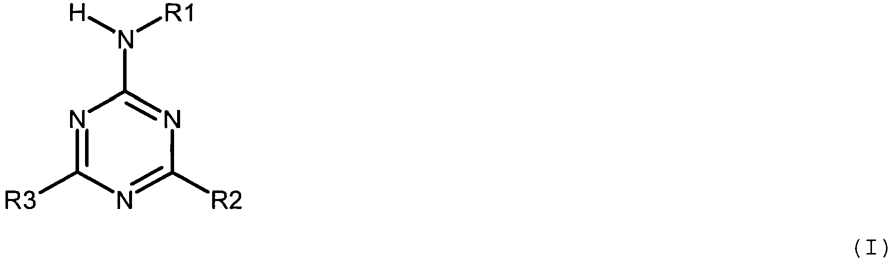 entspricht, wobei
- R² Q¹ oder einen mit seinem zentralen Stickstoffatom an den Triazinring der Struktur der Formel (I) gebundenen Rest der Formel **R⁴**-N-**R⁵** bedeutet, wobei
- Q¹ ein lineares oder verzweigtes C₁-C₅₀-Alkyl oder einen cyclischen Substituenten in Form eines C₅-C₂₀-Cycloalkyls, eines C₅-C₂₀-Aryls, eines C₁-C₂₀-alkylsubstituierten C₅-C₂₀-Aryls, C₂-C₂₀-Heterocyclus, C₂-C₂₀-alkenylsubstituiertes C₂-C₂₀-Heterocyclus, C₁-C₅₀-Alkylsubstituiertes C₂-C₂₀-Heterocyclus, eines C₂-C₂₀-Alkenyl, eines C₂-C₂₀-alkenylsubstituierten C₅-C₂₀-Aryls, eines C₂-C₁₂-Alkinyl oder eines Imids von cyclischen gesättigten oder ungesättigten Carbonsäuren, wobei das C₁-C₅₀-Alkyl oder der cyclische Substituent durch ein oder mehrere Sauerstoffatome, Schwefelatome, substituierte und/oder unsubstituierte Stickstoffatome und/oder durch ein oder mehrere Gruppen des Typs -C(O)O-, -OC(O)-, -C(O)-, -NHC(O)O-, -OC(O)NH- und/oder -OC(O)O- unterbrochen sein kann, ist,
- R³ Q¹ oder einen mit seinem zentralen Stickstoffatom an den Triazinring der Struktur der Formel (I) gebundenen Rest der Formel **R⁶-**N**-R⁷** bedeutet,
- **R¹, R⁴, R⁵, R⁶ und R⁷** unabhängig voneinander H oder Q² bedeuten, wobei
- Q² jeweils lineares oder verzweigtes C₁-C₅₀-Alkyl, C₅-C₂₀-Cycloalkyl, C₅-C₂₀-Aryl, C₁-C₂₀-alkylsubstituiertes C₅-C₂₀-Aryl, C₂-C₂₀-Heterocyclus, C₂-C₂₀-alkenylsubstituiertes C₂-C₂₀-Heterocyclus, C₁-C₅₀-Alkylsubstituiertes C₂-C₂₀-Heterocyclus, C₂-C₂₀-Alkenyl, C₂-C₂₀-alkenylsubstituiertes C₅-C₂₀-Aryl oder C₂-C₁₂-Alkinyl, das jeweils durch ein oder mehrere Sauerstoffatome, Schwefelatome, substituierte und/oder unsubstituierte Stickstoffatome und/oder durch ein oder mehrere Gruppen des Typs -C(O)O- -OC(O)-, -C(O)-, -NHC(O)O-, -OC(O)NH- und/oder -OC(O)O-unterbrochen sein kann und/oder weitere funktionelle Gruppen wie -OH, -NH₂, -NHR¹, SH, Halogen aufweisen kann, ist,
wobei das molare Verhältnis von Aminotriazinverbidnung zu Aldehyd in der Stufe a) einen Wert von 1: 1,3 bis 1:3 aufweist, und anschließende
b) Entfernung von überschüssigem Alkohol und Wasser unter gleichzeitiger Vorhärtung, bei Temperaturen von 80 - 150°C und Drücken von 100 - 400 mbar, in zwei hintereinander geschalteten Dünnfilmverdampfern, wobei ein erster Dünnfilmverdampfer bei Temperaturen von 80°C und 130 °C und ein zweiter Dünnfilmverdampfer in Abhängigkeit vom Durchsatz bei 130°C bis 150°C betrieben wird.
so dass ein Festharz
- mit einer Viskosität zwischen 3 bis 100 Pa.s bei einer Temperatur von 130°C über einen Zeitraum von mindestens 25 Minuten,
- einer Glasübergangstemperatur Tg zwischen 40°C und 80°C, und
- einer Molmasse von M_{w} = 150-1000 g/mol.
erhalten wird.

2. Verfahren nach Anspruch 1, **dadurch gekennzeichnet, dass** die in Stufe a) verwendete Aminotriazinverbindung ausgewählt ist aus einer Gruppe umfassend Melamin, C₁-C₅₀-alkylsubstituiertes Melamin, C₅-C₂₀-cycloalkylsubstituiertes Melamin, Guanamin oder Benzoguanamin.

3. Verfahren nach Anspruch 1 oder 2 **dadurch gekennzeichnet, dass** die Umsetzung in Stufe a) bei einer Temperatur von 80-150°C, bei einem Druck von 1-16 bar und einem pH-Wert von 5,3 - 7,8, durchgeführt wird.

4. Verfahren nach Anspruch 3, **dadurch gekennzeichnet, dass** die Umsetzung in Stufe a) bei einem pH-Wert von 5,5 bis 7,5 durchgeführt wird

5. Verfahren nach einem der vorhergehenden Ansprüche, **dadurch gekennzeichnet, dass** nach Stufe a) das Reaktionsprodukt durch Erhöhung des pH-Wertesstabilisiert wird.

6. Verfahren nach Anspruch 5, **dadurch gekennzeichnet, dass** nach Stufe a) das Reaktionsprodukt auf einen pH-Wert > 8,5 stabilisiert wird.

7. Verfahren nach einem der vorhergehenden Ansprüche, **dadurch gekennzeichnet, dass** das molare Verhältnis von Alkohol zu Aminoplastbildner in Stufe a) einen Wert von 1:25 bis 15:1, aufweist.

8. Verfahren nach Anspruch 7, **dadurch gekennzeichnet, dass** das molare Verhältnis von Alkohol zu Aminoplastbildner in Stufe a) einen Wert von 1:5 bis 10:1 aufweist.

9. Verfahren nach einem der vorhergehenden Ansprüche, **dadurch gekennzeichnet, dass** als Aldehyde C₁-C₁₂-Aldehyde mit einer oder mehreren Aldehydgruppen verwendet werden.

10. Verfahren nach Anspruch 9, **dadurch gekennzeichnet, dass** als Aldehyde para-Formaldehyd oder 30-50 %ige Formalinlösung verwendet werden.

11. Verfahren nach einem der vorhergehenden Ansprüche, **dadurch gekennzeichnet, dass** als Alkohol ein C₁-C₁₂-Alkohl mit einer oder mehreren Alkoholgruppen verwendet wird.

12. Verfahren nach Anspruch 11, **dadurch gekennzeichnet, dass** als Alkohol Methanol, Butanol, Hexanol, Butandiol, Trimetyhlolpropan oder Ethoxylate, verwendet wird.

13. Verfahren nach einem der vorhergehenden Ansprüche, **dadurch gekennzeichnet, dass** der Feststoffgehalt des in Stufe a) gebildeten Produktes zwischen 20 und 60 % liegt.

14. Verfahren nach Anspruch 13, **dadurch gekennzeichnet, dass** der Feststoffgehalt des in Stufe a) gebildeten Produktes zwischen 32 bis 51 % liegt.

## Claims

1. Process for the production of a thermoplastic processible aminoplast resin according to one of the preceding claims, **characterized by**
a) simultaneous conversion of at least one aminotriazine compound of the general formula (I) with at least one aldehyde and at least one alcohol,
whereat the triazine compound corresponds to the general formula (I) 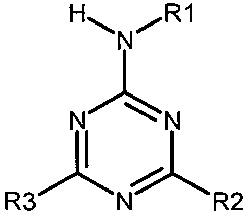 whereat
- R² means Q¹ or a moiety of the formula R⁴-N-R⁵ connected with its central nitrogen atom to the triazine ring of the structure of formula (I), whereat
- Q¹ means a linear or branched C₁-C₅₀-alkyl or a cyclic substituent in form of a C₅-C₂₀-cycloalkyl, a C₅-C₂₀-aryl, a C₁-C₂₀-alkyl substituted C₅-C₂₀-aryl, C₂-C₂₀-heterocycle, C₂-C₂₀-alkenyl substituted C₂-C₂₀-heterocycle, C₁-C₅₀-alkyl substituted C₂-C₂₀-heterocycle, a C₂-C₂₀-alkenyl', a C₂-C₂₀-alkenyl substituted C₅-C₂₀-aryl, C₂-C₁₂-alkinyl or an imide of cyclic saturated or unsaturated carboxylic acids, whereat the C₁-C₅₀-alkyl or the cyclic substituent can be interrupted by one or multiple oxygen atoms, sulphur atoms, substituted and/or unsubstituted nitrogen atoms and/or by one or multiple groups of the type -C(O)O-, -OC(O)-, -C(O)-, - NHC(O)O-, -OC(O)NH- and/or -OC(O)O-,
- R³ means Q¹ or a moiety of the formula R⁶-N-R⁷ connected with a nitrogen atom to the triazine ring of the structure of the formula (I),
- R¹, R⁴, R⁵, R⁶ and R⁷ being independently from each other H or Q₂, whereat
- Q₂ means in each case a linear or branched C₁-C₅₀-alkyl, C₅-C₂₀-cycloalkyl, C₅-C₂₀-aryl, C₁-C₂₀-alkyl substituted C₅-C₂₀-aryl, C₂-C₂₀-heterocycle, C₂-C₂₀-alkenyl substituted C₂-C₂₀-heterocycle, C₁-C₅₀-alkyl substituted C₂-C₂₀-heterocycle, C₂-C₂₀-alkenyl, C₂-C₂₀-alkenyl substituted C₅-C₂₀-aryl or C₂-C₁₂-alkinyl, which in each case can be interrupted by one or multiple oxygen atoms, sulphur atoms, substituted and/or unsubstituted nitrogen atoms and/or by one or multiple groups of the type -C(O)O-, -OC(O)-, -C(O)-, -NHC(O)O-, -OC(O)NH- and/or -OC(O)O- and/or can have further functional groups like -OH, -NH₂, -NHR¹, SH, halogen,
wherein the molar ratio of aminotriazine compound to aldehyde in step a) has a value of 1:1.3 to 1:3,
and subsequent
b) removal of excess of alcohol and water by a simultaneous precuring at temperatures of 80 - 150 °C and pressures of 100 - 400 mbar in two thin film evaporators connected in series, wherein a first thin film evaporator is operated at 80 to 130°C and the second thin film evaporator is operated in dependency from the throughput at 130 to 150°C,
so that a solid resin with
- a viscosity between 3 to 100 Pas at a temperature of 130°C over a time period of at least 25 min,
- a glass transition temperature T_{G} between 40°C and 80°C, and
- a molar mass of M_{w} = 150 - 1000 g/mol.
is obtained.

2. Process according to claim 1, **characterized in that** the aminotriazine compound used in step a) is selected from a group comprising melamine, C₁-C₅₀-alkyl substituted melamine, C₅-C₂₀-cycloalkyl substituted melamine, guanamine or benzoguanamine.

3. Process according to claim 1 or 2 **characterized in that** the conversion in step a) is carried out at a temperature of 80 - 150 °C, at a pressure of 1 - 16 bar and a pH value of 5.3 - 7.8.

4. Process according to claim 3, **characterized in that** the conversion in step a) is carried out at a pH value of 5.5 to 7.5.

5. Process according to one of the preceding claims, **characterized in that** the reaction product of step a) is stabilized by increasing the pH value.

6. Process according to claim 5, **characterized in that** the reaction product of step a) is stabilized by increasing the pH value to a value > 8.5.

7. Process according to one of the preceding claims **characterized in that** the molar ratio of alcohol to aminoplast former in step a) has a value of 1:25 to 15:1.

8. Process according to claim 7 **characterized in that** the molar ratio of alcohol to aminoplast former in step a) has a value of 1:5 to 10:1.

9. Process according to one of the preceding claims, **characterized in that** C₁-C₁₂-aldehyde with one or multiple aldehyde groups are used as aldehyde.

10. Process according to claim 9, **characterized in that** para-formaldehyde or 30-50% formalin solution are used as aldehyde.

11. Process according to one of the preceding claims, **characterized in that** a C₁-C₁₂-alcohol with one or multiple alcohol groups is used as alcohol.

12. Process according to claim 11, **characterized in that** methanol, butanol, hexanol, butandiol, trimetyhlolpropane or ethoxylate is used as alcohol.

13. Process according to one of the preceding claims, **characterized in that** the amount of solids of the product formed in step a) is between 20 and 60%.

14. Process according to claim 13, **characterized in that** the amount of solids of the product formed in step a) is between 32 to 51%.

## Revendications

1. Procédé de fabrication d'une résine aminoplaste transformable par voie thermoplastique, **caractérisé par**
a) la réaction simultanée d'au moins un composé aminotriazine de formule générale (I) avec au moins un aldéhyde et au moins un alcool, dans lequel le composé triazine correspond à la formule générale (I) 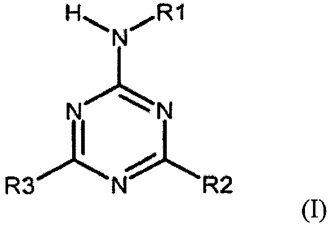 dans laquelle
- R² représente Q¹ ou un résidu de formule R⁴-N-R⁵ lié par son atome d'azote central au cycle triazine ayant la structure de formule (I),
- Q¹ est un alkyle en C₁-C₅₀ linéaire ou ramifié ou un substituant cyclique sous la forme d'un cycloalkyle en C₅-C₂₀, d'un aryle en C₅-C₂₀, d'un aryle en C₅-C₂₀ substitué par un alkyle en C₁-C₂₀, d'un hétérocycle en C₂-C₂₀, d'un hétérocycle en C₂-C₂₀ substitué par un alcényle en C₂-C₂₀, d'un hétérocycle en C₂-C₂₀ substitué par un alkyle en C₁-C₅₀, d'un alcényle en C₂-C₂₀, d'un aryle en C₅-C₂₀ substitué par un alcényle en C₂-C₂₀, d'un alcinyle en C₂-C₁₂ ou d'un imide d'acides carboxyliques cycliques saturés ou insaturés, dans laquelle l'alkyle en C₁-C₅₀ ou le substituant cyclique peut être interrompu par un ou plusieurs atomes d'oxygène, atomes de soufre, atomes d'azote substitués et/ou non substitués et/ou par un ou plusieurs groupes du type -C(O)O-, -OC(O)-, -C(O)-, -NHC(O)O-, -OC(O)NH- et/ou - OC(O)O-,
- R³ représente Q¹ ou un résidu de formule R⁶-N-R⁷ lié par son atome d'azote central au cycle triazine ayant la structure de formule (I),
- dans laquelle R¹, R⁴, R⁵, R⁶ et R⁷ représentent indépendamment les uns des autres H ou Q²,
- Q² est respectivement un alkyle en C₁-C₅₀ linéaire ou ramifié, un cycloalkyle en C₅-C₂₀, un aryle en C₅-C₂₀, un aryle en C₅-C₂₀ substitué par un alkyle en C₁-C₂₀, un hétérocycle en C₂-C₂₀, un hétérocycle en C₂-C₂₀ substitué par un alcényle en C₂-C₂₀, un hétérocycle en C₂-C₂₀ substitué par un alkyle en C₁-C₅₀, un alcényle en C₂-C₂₀, un aryle en C₅-C₂₀ substitué par un alcényle en C₂-C₂₀ ou un alcinyle en C₂-C₁₂, qui peut être interrompu par un ou plusieurs atomes d'oxygène, atomes de soufre, atomes d'azote substitués et/ou non substitués et/ou par un ou plusieurs groupes du type - C(O)O-, -OC(O)-, -C(O)-, -NHC(O)O-, -OC(O)NH- et/ou -OC(O)O- et/ou peut présenter d'autres groupes fonctionnels tels que -OH, -NH₂, -NHR¹, SH, halogène, dans laquelle
le rapport molaire du composé aminotriazine sur l'aldéhyde à l'étape a) présente une valeur de 1:1,3 à 1:3, et
b) l'élimination de l'alcool excédentaire et de l'eau sous durcissement préalable simultané, à des températures de 80 à 150 °C et à des pressions de 100 à 400 mbar, dans deux évaporateurs à couche mince montés l'un derrière l'autre, dans lequel un premier évaporateur à couche mince fonctionne à des températures de 80 °C et 130 °C et un deuxième évaporateur à couche mince fonctionne en fonction du débit à une température de 130 °C à 150 °C,
de manière à obtenir une résine solide
- avec une viscosité comprise entre 3 et 100 Pa.s à une température de 130 °C pendant une durée d'au moins 25 minutes,
- une température de transition vitreuse Tg comprise entre 40 °C et 80 °C, et
- une masse molaire M_{w} = 150 à 1000 g/mole.

2. Procédé selon la revendication 1, **caractérisé en ce que** le composé aminotriazine utilisé à l'étape a) est choisi dans un groupe comprenant la mélamine, la mélamine substituée par un alkyle en C₁-C₅₀, la mélamine substituée par un cycloalkyle en C₅-C₂₀, la guanamine ou la benzoguanamine.

3. Procédé selon la revendication 1 ou 2, **caractérisé en ce que** la réaction à l'étape a) est réalisée à une température de 80 à 150 °C, à une pression de 1 à 16 bars et à un pH de 5,3 à 7,8.

4. Procédé selon la revendication 3, **caractérisé en ce que** la réaction à l'étape a) est réalisée à un pH de 5,5 à 7,5.

5. Procédé selon l'une des revendications précédentes, **caractérisé en ce que**, après l'étape a), le produit de la réaction est stabilisé par une hausse du pH.

6. Procédé selon la revendication 5, **caractérisé en ce que**, après l'étape a), le produit de la réaction est stabilisé par un pH > 8,5.

7. Procédé selon l'une des revendications précédentes, **caractérisé en ce que** le rapport molaire de l'alcool sur le générateur d'aminoplaste à l'étape a) présente une valeur de 1:25 à 15:1.

8. Procédé selon la revendication 7, **caractérisé en ce que** le rapport molaire de l'alcool sur le générateur d'aminoplaste à l'étape a) présente une valeur de 1:5 à 10:1.

9. Procédé selon l'une des revendications précédentes, **caractérisé en ce que** des aldéhydes en C₁-C₁₂ ayant un ou plusieurs groupes aldéhyde sont utilisés comme aldéhydes.

10. Procédé selon la revendication 9, **caractérisé en ce que** le para-formaldéhyde ou une solution de 30 à 50 % de formol sont utilisés comme aldéhydes.

11. Procédé selon l'une des revendications précédentes, **caractérisé en ce qu'**un alcool en C₁-C₁₂ ayant un ou plusieurs groupes alcool est utilisé comme alcool.

12. Procédé selon la revendication 11, **caractérisé en ce que** le méthanol, le butanol, l'hexanol, le butanediol, le triméthylolpropane ou les éthoxylates sont utilisés comme alcools.

13. Procédé selon l'une des revendications précédentes, **caractérisé en ce que** la teneur en solide du produit formé à l'étape a) est comprise entre 20 et 60 %.

14. Procédé selon la revendication 13, **caractérisé en ce que** la teneur en solide du produit formé à l'étape a) est comprise entre 32 et 51 %.
